(19) Europäisches Patentamt

European Patent Office

Office européen des brevets

(11) **EP 2 132 530 B1**

(12) **EUROPEAN PATENT SPECIFICATION**

(45) Date of publication and mention
of the grant of the patent:
**21.08.2013 Bulletin 2013/34**

(51) Int Cl.:
*G01C 15/00* *(2006.01)*  *G01C 21/28* *(2006.01)*

(21) Application number: **08718123.6**

(22) Date of filing: **20.03.2008**

(86) International application number:
**PCT/EP2008/053415**

(87) International publication number:
**WO 2008/113861 (25.09.2008 Gazette 2008/39)**

(54) **SYSTEM AND METHOD FOR POSITION DETERMINATION**

ANORDNUNG UND VERFAHREN ZUR POSITIONSBESTIMMUNG

SYSTÈME ET PROCÉDÉ DE LOCALISATION

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **21.03.2007 EP 07005759**

(43) Date of publication of application:
**16.12.2009 Bulletin 2009/51**

(73) Proprietor: **Universiteit Gent
9000 Gent (BE)**

(72) Inventor: **GAUTAMA, Sidharta
B-9000 Gent (BE)**

(74) Representative: **Wauters, Davy Erik Angelo
DenK iP bvba
Leuvensesteenweg 203
3190 Boortmeerbeek (BE)**

(56) References cited:
**EP-A- 1 677 076     WO-A-2004/059900
US-A- 5 999 866     US-A1- 2002 049 530**

**Description**

**Technical field of the invention**

The present invention relates to a method and system for determining positions of objects, e.g. in a three dimensional environment. More particularly, the present invention relates to a method and system for determining a position of an object using a mobile system, e.g. for mapping and navigation.

**Background of the invention**

To date, the use of mapping systems and street-level geospatial imaging, e.g. for use in motor vehicles or for imaging purposes, has been widely spread and still is rapidly growing. This imposes not only the requirement that more and more areas can be mapped appropriately, but it also imposes additional requirements regarding accuracy, resulting in a need for efficient and reliable systems for generating position determination and/or mapping information having a high level of accuracy. Therefore, an important bottleneck in the use of mobile mapping systems in inventory and surveying applications is the positional accuracy that can be associated with the sensor data.

A known way of generating position determination information or mapping information uses an image based mobile mapping system. One example is the GPSVan developed by the Center for Mapping at the Ohio State University. This mobile mapping system is designed to map railway, highway and the transportation infrastructure such as for example roads, signs, and bridges while traveling at normal traffic speed. The GPSVan positioning module uses a differential global positioning system (DGPS) and an inertial navigation system (INS) to record the vehicle's position during temporary global positioning system data outages. The positioning of the vehicle is good to 10 cm at three-second intervals (i.e. 0.3 frames/sec) when GPS data is available. GPS data outages of 30 s, 60 s and 120 s cause the positioning degradation to the level of 0.2 m, 0.4 m and 1.0 m, respectively.

A system using similar features is VISAT, developed at the University of Calgary. VISAT uses a high accuracy strapdown inertial navigation system to provide high quality angular orientation parameters of the CCD cameras, along with positional orientation parameters from DGPS. An INS position accuracy of 10-30 cm is reported depending on the GPS outage period (30 sec - 3 min). The accuracy is also dependent of the trajectory taken (straight line versus curve). The accuracy reported is only on the position of the INS. 3D measurement of field objects in the stereo images will be less accurate depending on the distance to the camera.

When a navigation system (GPS/INS) is used to determine the position of the vehicle, depending on environment variables (number of visible satellites, multipath due to high buildings) the position accuracy can vary from centimeter to meter accuracy over a given region. The overall accuracy which can be obtained over a region is difficult to predict since the impact of the environment variables is not straightforward to model in an efficient manner (e.g. to model the multipath problem, one would need the exact position of the vehicle, the satellites and a 3D model of the environment at a given moment in time).

In current systems, planning takes only rudimentary satellite data into account to roughly estimate the visibility of satellites in a given region. Due to the impact of environment variables (e.g. buildings) on the visibility, in urban environments these variables are difficult to model and planning becomes impractible. In these cases, only the posterior reporting of the accuracy is used during or after the survey. In case the accuracy is not sufficient, the same survey route is driven again until a better visibility of satellites is available.

US patent 6,526,352 describes an arrangement and method for mapping a road during travel of a vehicle having two data acquisition modules arranged on sides of the vehicle, each including a GPS receiver and antenna for enabling the vehicle's position to be determined and a linear camera which provides one-dimensional images of an area on the respective side in a vertical plane perpendicular to the road such that information about the road is obtained from a view in a direction perpendicular to the road. A processor unit forms a map database of the road by correlating the vehicle's position and the information about the road. Instead of or in addition to the linear cameras, scanning laser radars are provided and transmit waves downward in a plane perpendicular to the road and receive reflected waves to provide information about distance between the laser radars and the ground for use in forming the database.

WO 2004/059900 A describes a system for simultaneous localization and mapping. The system comprises a camera for obtaining an image of the environment and for using landmark information for which position information is associated with the image to derive a position of at least one object imaged. It also discloses a system for landmark recognition wherein a plurality of features of the landmark are used for the recognition. It furthermore discloses a system for refining obtained position information based on perturbation calculations taking into account an uncertainty associated with the landmark. US2002/049530 A1 discloses a spatial position and orientation sensor for providing information based on a three-dimensional imaging system. Knowledge of changes in position relative to fixed features is used to determine movement of an object in three dimensions. When the object moves to a different environment, refreshment of the selected control points in that environment is performed. EP-A-1677076 discloses a navigational system and method for processing two-dimensional sensor images for navigation and determination of position in three dimensions. The position determination is based on recognition of landmark features previously identified and stored in a database. Refinement of the estimated position, orientation and velocity is based on acquiring additional images.

**Summary of the invention**

It is an object of the present invention to provide good methods and systems for determining position of objects. It is an advantage of embodiments according to the present invention that systems and methods are provided allowing good absolute positional accuracy for determining position of objects. It is an advantage of embodiments according to the present invention that the accuracy of the positional data can be known in advance, determined, set controlled and/or guaranteed. It is an advantage of embodiments according to the present invention that a reliable solution is provided for a positioning system based on image information. It is an advantage of embodiments of the present invention that the reliability is good over the full trajectory, independent of the environmental features present. It is an advantage of some embodiments of the present invention that an absolute positional accuracy of 10cm or better can be obtained. It is an advantage of embodiments according to the present invention that the required accuracy of the positional information can be determined upfront and that accuracy of positional information to be determined can be increased up front. It is an advantage of embodiments according to the present invention that accuracy of the data that will be obtained can be determined upfront based on information regarding the route that will be used for collecting the information. It is an advantage of embodiments according to the present invention that planning and adjusting of a route to be followed for collecting positional data can be performed so that a predetermined accuracy can be obtained. It is an advantage of embodiments according to the present invention that the overall positional accuracy can be guaranteed allowing efficient planning of the production and delivery of spatial information based on a mobile mapping system. It is an advantage of embodiments according to the present invention that these may allow stabilisation of the accuracy of the navigation system. It is an advantage of embodiments according to the present invention that a prediction of the overall positional accuracy can be made. It is an advantage of embodiment according to the present invention that a prediction of the accuracy can be made independent of the quality of the GPS signal. It is an advantage of embodiments according to the present invention that a cost efficient solution for predicting the accuracy can be obtained. It is an advantage of embodiments according to the present invention that prediction of accuracy can be obtained without the need for modelling environmental variables. It is an advantage of embodiments according to the present invention that control of the positional accuracy can be performed by controlling the number of ground control points in the network. The number of ground control points therefore may be used as a variable.

It is an advantage of embodiments according to embodiments of the present invention that the ground control point network can be reused for different survey operations.

The above objective is accomplished by a methods and systems according to the present invention, as defined in the appended claims.

The present invention relates to a system as claimed in claim 1.

It is an advantage of embodiments according to the present invention that a high positional accuracy can be guaranteed over the full trajectory to be covered. It furthermore is an advantage of embodiments of the present invention that the measurements are independent of the availability of highly accurate GPS data, which often cannot be guaranteed over the full trajectory in view of connectivity to global positioning system data. It furthermore is an advantage of embodiments of the present invention that the inherent drift present in inertial navigation system data is stabilized to guarantee a positional accuracy over the trajectory, independent of the length of the trajectory.

It is an advantage of embodiments according to the present invention that highly accurate 3D measurements can be carried out, e.g. using integrated positional and stereo data captured on a mobile support.

The accuracy control system may be adapted for increasing the number of control points used to obtain a predetermined accuracy.

The image processing means may comprise a stochastic filter for associating said control point position information about a position of the control points in the environment to an image of the control points in the at least one image of the environment.

The stochastic filter may be adapted for fusing control point information with data of an inertial navigation system.

The stochastic filter may be a Kalman filter.

Position information about at least one imaged object in the environment thus may be obtained by reference to positional information of imaged control points in the image of the environment obtained, not solely by reference to the vehicle from where the images are recorded.

The position information about a position of control points in the environment may be geographic position information with respect to a reference system fixed to the surface of the earth. The geographic position information also may be position information with respect to a surface of an ellipsoid modelling the earth.

The at least one image of the environment may comprise a three dimensional image.

The at least one image of the environment may comprise a stereoscopic image.

The at least one image of the environment may comprise a dynamic image. The dynamic image may be a video image.

The image processing means may furthermore be adapted for determining an image of the control points in the at least one image of the environment.

The image receiving means may comprise at least one image recording means for recording the at least one image of the environment. The image recording means may be a camera.

The image receiving means may comprise at least two image recording means for recording the image of the environment.

The at least one image recording means may have a fixed position in an inertial navigation system, wherein the image processing means furthermore may take into account inertial navigation system information for determining the position of the at least one imaged object. The image processing means may take into account the relative position of the at least one image recording means.

It is an advantage of embodiments of the present invention that the overall degree of accuracy for position determination required can be adapted by selecting the density of control points, e.g. ground control points, used for compensating drift. It is an advantage of embodiments of the present invention that the required accuracy for the inertial navigation system can be reduced, e.g. allowing a larger drift of the inertial navigation system, by appropriately selecting the data of ground control points used, i.e. for example by selecting a higher density of ground control points. The density of the control points, e.g. control point network, allows to compensate for the inertial navigation system drift.

The system may furthermore comprise a selecting means for selecting between the image processing means and a data processing means based on a global positioning system.

The at least one image may comprise dynamic images and the image processing means may be adapted for, in a given frame, taking into account position control information of control points associated in a previous and/or a following frame.

The system may comprise an inertial navigation system for determining determine relative movement of an object in six degrees of freedom in space.

The system furthermore may comprise a track planning means or may be adapted for selecting from a plurality of tracks based on available control points, a track having a suitable accuracy for an application envisaged.

The present invention also relates to a method as defined in claim 12.

The method may comprise, prior to obtaining said image, estimating an accuracy of position information that will be obtained and performing said controlling as function thereof.

The controlling control points comprises controlling the number of control points used.

Associating position information about a position of the control points in the environment to an image of the control points in the at least one image of the environment may comprise using a stochastic filter. The stochastic filter may be used for fusing control point information with data of an inertial navigation system. The stochastic filter may be a Kalman filter.

The at least one image of the environment is a three dimensional image.

Obtaining at least one image of the environment may comprise recording a stereoscopic image of the environment.

Associating position information about a position of the control points in the environment to an image of the control points in the at least one image of the environment may comprise using a stochastic filter.

The stochastic filter may be a Kalman filter.

The method furthermore comprises controlling the number of control points for obtaining a predetermined accuracy.

The method furthermore may comprise selecting deriving positional information taking into account the associated position information of the image of the control points or deriving positional information of the object based on a global positioning system.

The at least one image may comprise a plurality of frames, wherein deriving positional information of the object using one frame comprises taking into account positional information of control points detected in previous frames and positional information of control points detected in further frames.

The present invention also relates to a method as defined in claim 14.

Controlling the ground control points used comprises controlling a number of control points that is used.

The present invention also relates to a computer program product for, when run on a computer, performing any of the methods as described above.

The present invention furthermore relates to a machine readable data storage device storing such a computer program product and/or to transmission of such a computer program product over a local or wide area telecommunications network.

The present invention also relates to an application for mapping or surveying an object, the application using position determination information obtained with a system as described above or a using a method as described above.

The present invention also relates to an image of an object in an environment, the image comprising position information obtained with a system as described above or using a method as described above.

It is an advantage of embodiments of the present invention that not only the high accuracy positional requirements are obtained, but also that these are obtained consistently over the full trajectory of the object, even if significantly different conditions are present at different areas of the trajectory.

It is also an advantage of embodiments of the present invention that the reliability information allows a user to validate if accuracy performance is reached with the given system settings. This information for example allows to plan the field work to collect the control point network, e.g. ground control point network, before the start of the data collection.

It furthermore is an advantage of embodiments according to the present invention that the system and method allows to replan in an efficient and user-friendly way by adding additional control points, e.g. ground control points, in order to obtain the expected accuracy.

It is an advantage of embodiments of the present invention that the obtained methods and systems can be easily combined with existing methods and systems for generating position determination information, such as e.g. solutions based on global positioning system information in combination with the inertial navigation system, e.g. for areas where a good global positioning system performance is guaranteed.

It is an advantage of the present invention that accurate three dimensional measurements in world coordinate system can be obtained based on video images recorded from a mobile support. It is an advantage of the system and method used that a user, e.g. land surveyor, can digitally map object boundaries in the field without being on that location, e.g. from behind his desk, with a high absolute positional accuracy, e.g. an accuracy better than 30cm, preferably better than 25cm, more preferably better than 20cm, even more preferably better than 15cm, still more preferably better than 10cm.

It is an advantage of embodiments according to the present invention that external geographic information can be used for production of new position determination information data.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the design of improved methods and apparatus for determining position of objects, for example improved methods and apparatus for mapping and navigation.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 is a schematic overview of standard and optional parts of a system for generating position determination information according to embodiments of the present invention.

Fig. 2 is a schematic illustration of the relative positioning of a vehicle with respect to a control point, as can be used in embodiments according to the present invention..

Fig. 3 shows a schematic illustration of the integration of different position measurements as can be used in methods and systems according to embodiments of the present invention.

Fig. 4 vehicle for recording position determination information or mapping information as can be used in embodiments according to the present invention.

Fig. 5 is a schematic overview of information flow that may occur in embodiments according to the present invention.

Fig. 6 is an example of a planned route as can be obtained using a system or method according to embodiments of the present invention.

Fig. 7 is an example of a plot of an original and a processed output variance as can be obtained with systems or methods according to embodiments of the present invention.

Fig. 8 is an example of an original and processed trajectory, as can be obtained with a system or method according to an embodiment of the present invention.

Fig. 9 is an example of a ground control point, as can be used according to an embodiment of the present invention.

Fig. 10 illustrates an example of validation of the absolute accuracy as can be obtained in a system or method according to embodiments of the present invention.

Fig. 11 is a schematic overview of a computing system as can be used for carrying out the methods according to embodiments of the present invention.

In the different figures, the same reference signs refer to the same or analogous elements.

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Furthermore, while some embodiments described herein include some but not other features included in other embodiments, combinations of features of different embodiments are meant to be within the scope of the invention, and form different embodiments, as would be understood by those in the art. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention. A global positioning system relates to a positioning system that is satellite-based and allows to determine a latitude, longitude and elevation of a GPS receiver on the earth surface. It thus provides a geographic positioning or localisation of objects. An inertial navigation system is a relative positioning system allowing determination of the relative movement of an object. It may e.g. use angular rate sensors and accelerometers together with a computational unit. It may allow to determine relative movement of an object in six degrees of freedom in space, namely for three translational directions (x,y,z) and three rotational directions (theta, psi, phi). A geographic or geodetic reference frame or absolute reference frame in the present application is a reference frame linked to a specific ellipsoid used to model the earth, allowing to provide well-defined geographic reference coordinates for objects on the earth.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

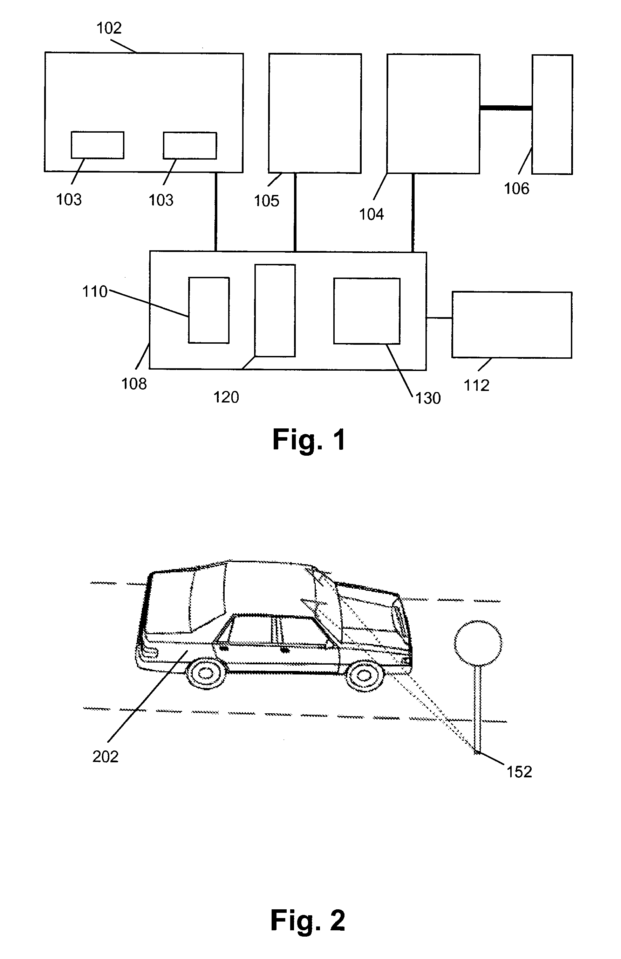

In a first aspect, the present invention relates to a system for generating position determining information. Such position determining information may for example be suitable for mapping applications. A schematic representation of an exemplary system 100 for generating position determination information is shown in Fig.1. The system 100 comprises an image receiving means 102 for obtaining an image of the environment. In a preferred embodiment, the image of the environment is a three dimensional image. The image may e.g. be a stereoscopic image, for example obtained by acquiring stereo images using a setup of two or more camera's mounted on a frame. The images may be video images or a set of images recorded over time, i.e. at given intervals such as for example at regular intervals. The image of the environment may be obtained from an external recording means, or, preferably, the image receiving means 102 may comprise at least one camera 103. The at least one camera 103 may be a digital or analogue camera. The at least one camera 103 may be calibrated for internal and external parameters so that for a given frame configuration the at least two dimensional, preferably three dimensional coordinates, of a point in the image can be measured in a local coordinate system associated with the stereo frame. Such an associated local coordinate system or local camera frame from where the image of the environment is taken can be transformed to an absolute reference system using an inertial navigation system (INS). As will be set out later, the imaging recording means or camera 103 may be a moving system, wherein the images received in the image receiving means 102 are video images or dynamic images recorded for different positions of the imaging recording means or camera 103 at different moments in time. Such a system can advantageously be used for obtaining position information for mapping systems, as required information may be gathered while the transportation means 202 is moving, resulting in a high efficiency of obtaining position determination information. Such information may then be used and stored in mapping and positioning systems for individual users, such as e.g. in mapping and positioning systems for use in vehicles, like for example cars. Data acquisition and/or image calculation based on the recorded or imaged data may be performed using any suitable driving applications, e.g. based on or built using LabView.

The system 100 furthermore may comprise a means for obtaining control point information, also referred to as a control point information obtaining means 104, allowing to obtain position information about a position of a control point 152 in the environment. Such a control point 152 in the environment may be any type of control point 152 for which geographic referenced position information is available or can be made available, such as positions of traffic signs, position of small well localised environmental objects, etc. A survey instrument may be used for measuring a number of control points on site. The control point information thereby preferably comprises a geographical position of the control point, which may be measured for example using a global positioning system, a surveyor or in any other suitable way. It is an advantage that such information can be determined even for places where no GPS is operational e.g. due to environmental disturbances, as also other means of determining geographical position can be used. The means for obtaining control point information may obtain such information via a communication path such as e.g. a network, from one or more storing systems 106, such as one or a plurality of databases or look up tables. Such information also may be stored locally in the system for generating position determining information. Such control points will be taken into account for determining position determination information for objects in the image of the environment taken, using an image of the control point in the at least one image of the environment. Imaging of such a control point 152 in the environment is schematically illustrated in Fig. 2. The control point 152 preferably is a plurality of control points. Preferably a network of control points is present providing absolute geographical position information near all places of interest.

The system 100 furthermore may comprise an inertial navigation system (INS) 105 as indicated in Fig. 1, which is a relative positioning system allowing determination of the relative movement of an object and which preferably is used, together with control points, to transform the local camera frame to an absolute reference frame. The inertial navigation system 105 thus may allow determination of the relative movement of an object. It may e.g. use angular rate sensors and accelerometers together with a computational unit. It may allow to determine relative movement of an object in six degrees of freedom in space, namely three translational directions, i.e. movement in x, y, z direction, and three rotational directions, i.e. movement by rotation around three axis e.g. over angles theta, psi, phi. Such a system may comprise information about the relative position of the objects in the image with respect to the local camera frame. Information of the inertial navigation system may comprise a relative position, a speed, a viewing angle, position of different image recording means, etc. The inertial navigation system information also may comprise an absolute geographic position of the inertial navigation system, e.g. determined by GPS. In such a case, the system and method according to the present invention then may be used for correcting for drift of the inertial navigation system.

The system 100 furthermore comprises an image processing means 108. The image processing means 108, may be an image processor. The image processing means 108 is adapted for associating the control point position information for the control point 152 in the environment to an image of the control point 152 in the image of the environment. In this way, absolute geographic position can be obtained by coupling the local camera frame from where the image of the environment is taken to a world coordinate system, i.e. a geographic or geodetic coordinate system. Such geographic position determination may be required e.g. for surveying purposes or mapping purposes. The image of the control point 152 may be identified in any suitable way. This may be performed for example manually. Alternatively, determination of such control points 152 may be performed in an automatic or automated way, e.g. using image recognition algorithms, using neural networks, etc. The image processing means 108 therefore may comprise a control point recognition module 110. The control points may be identified in acquired stereo image frames.

The image processing means 108 furthermore is adapted for deriving, from the image of the environment, position information of at least one object in the environment taking into account the associated position information of the image of the control point 152. The image processing means 108 furthermore preferably takes into account information from the inertial navigation system. Therefore a data transfer may be provided between the image processing means 108 and the inertial navigation system. Furthermore, if images are recorded from a mobile support, use may be made of associated movement data of the mobile support and the known relative geometry of cameras and positioning instruments. The position and physical dimensions of objects in subsequent stereo image frames may be determined. The latter may be directly in the image wherein a control point is identified or in image frames in between image frames wherein control points can be measured.

The object may be the point of origin of the local camera frame from where the image is recorded, such as e.g. a position of the transportation means for a camera system used, or it may be an object imaged in the image of the environment. In order to couple the control point position information to the position of the transportation means, to the origin or a point in the local camera frame or to the object in the image, the position and viewpoint of the image recording means 103 with which the image is recorded may be taken into account. The position information can be geographic position information about an imaged object, based on the relative position of the imaged object in the at least one image of the environment, and the absolute geographic position information for the control points imaged in the image of the environment. Determination of such an absolute geographic position information of at least one object of interest in the environment may for example be obtained by taking into a relative position of the object of interest with respect to the control point of interest. The absolute geographic position information of at least one object of interest in the environment may also be obtained by taking into account a relative position of the object of interest with respect to a local camera frame from which the image is obtained and the relative position of the control point(s) 152 for which absolute geographic position is known. In order to determine absolute geographic positions of objects, the coordinates of the local camera framework from which the image is received or the coordinates of the local camera framework coupled to the image thus preferably is transferred to a world coordinate system, also referred to as geographic reference frame. To calculate this transformation, a so-called "hand-eye calibration" may be performed to place the geometry of the imaging frame work in a world coordinate system. Alternatively, or in addition thereto, the initial position of the local camera frame may be predetermined and deriving, from the image of the environment, position information of at least one object in the environment taking into account the associated position information of the image of the control point 152 may be performed to correct for drift of the system, e.g. of the inertial navigation system, over time. In other words, position information of control points in the image may be used for recalibrate the position of the system, e.g. in order to correct for the drift of the inertial navigation system. Such a drift may be an uncontrolled drift being up to 1 or 2 cm/sec.

The image processing means 108 may use whole or part of the imaged environment. It may comprise a setting unit for setting the search area to be used for image correlation processing based on the control points determined in the control point recognition module 110. In this way, the reference data being position information data and the image data that will be combined are selected. The image processing means 108 may perform an orientation calculation for this data in order to obtain appropriate matching.

The image processing means 108 may integrate forward and backward control points, and the different observations of the object in overlapping or subsequent image frames. Furthermore, the predicted positional accuracy of the 3D measurement due to distance to the device, hardware properties and digitalisation errors are taken into account.

The system 100 furthermore may comprise an output means 112 for exporting the obtained positional information for the object, e.g. the three dimensional measurement information for the object. The obtained information may be position related information but furthermore may comprise physical dimensions of objects. Such information may be exported together with metadata. Such metadata may be documenting the estimated accuracy of the measurement. Other information related to the object also may be included in the metadata. Such information may depend on the application for which the data will be used. The output means may comprise a display unit such as e.g. a stereo monitor, a personal computer monitor or the like allowing imaging, such as e.g. providing stereoscopic vision.

The image processing means 108 thus may be adapted for processing, computing, calculating, determining or the like of data, which refers to an action and/or processes of a computer or computing system, or similar electronic computing device, that manipulate and/or transform data represented as physical, such as electronic, quantities into other data similarly represented as physical quantities. Such an image processing means 108 may comprise "CPU" or processor, which may refer to any device or portion of a device that processes electronic data, e.g., from registers and/or memory to transform that electronic data into other electronic data that, e.g., may be stored in registers and/or memory. The term memory as used herein also encompasses a storage system such as a disk drive unit. The image processing means 108 may include a memory subsystem including main RAM and/or a static RAM, and/or ROM. The image processing means 108 may comprise a graphics processing unit. The image processing means 108 may include one or more processors. The processors may accept computer-readable (also called machine-readable) code containing instructions. A bus subsystem may be included for communicating between the components.

In preferred embodiments according to the present invention, the image processing means 108 comprising using a stochastic filter 120 for associating a control point to the at least one image of the environment. Such a stochastic filter 120 may e.g. be a Kalman filter. The filter 120 may fuse the data to predict the absolute position of an object of the image associating control point information with the at least one image of the environment. Such association may be used for calibration or re-calibration of the inertial navigation system to absolute geographical coordinates. The filter may be designed to fuse data of a control point network, e.g. ground control point network with the inertial navigation system measurements. It may be used to integrate data of different position measurement systems. Such a filter may allow to predict the absolute position of local camera frame from wherein the image is taken or to predict the absolute position of objects in the image of the environment. The position of such points may be determined by the position of the local camera frame estimated using information from the imaging technique, such as e.g. stereo photogrammetry, and the known position of the control points and by inertial navigation system measurements. The inertial navigation system measurements may be based on previously calibrated positions of the local reference frame or may be based on a different technique for obtaining position. In addition the stochastic filter, such as e.g. the Kalman filter, allows to estimate the reliability of the prediction, based on an error covariance matrix for the inertial navigation system and the photogrammetric measurements. The error covariance matrix on the photogrammetric measurements depends among others on the imaging geometry (baseline, CCD resolution, lens focal length) and the distance of the observed control points, e.g. ground control points, to the camera reference frame. In one example, data integration may be performed using a stochastic filter to integrate position data and relative movement coming from the navigation system together with position data measured using a 3D ranging device. In this example, a loosely coupled filter for integration may be employed. It is an advantage of embodiments according to the present invention that integration of measurements of the navigation system and measurements of a three dimensional ranging device providing a position with respect to a ground control point network can be appropriately fused into a single position estimation. It furthermore is an advantage of embodiments of the present invention that an associated accuracy can be provided. Other types of integration are also possible and do not change the spirit of the invention. The state $x_k$ of the filter may be defined as the position of the vehicle, typically measured as the center of the navigation system mounted in the vehicle. The state of the system may be controlled by the movement of the vehicle. This is modeled by taking the relative displacement measurements of the navigation system (acceleration and pose). An example of control input is the displacement $u_k$ calculated based on the relative displacement measurements which is added to the previous state:

$$x_k = x_{k-1} + u_k + w_k \qquad\qquad [1]$$

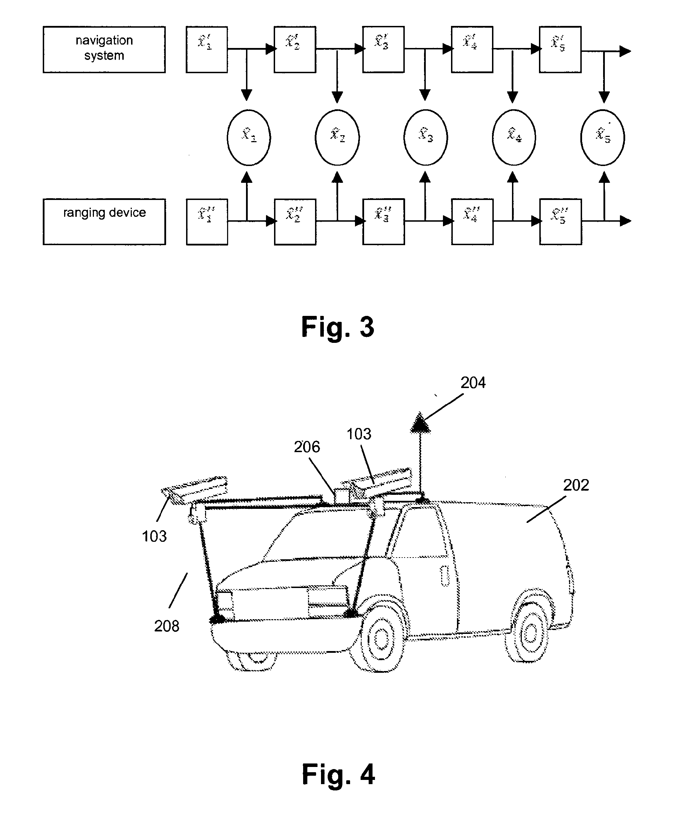

The random variable $w_k$ models the input noise on the control. It can be taken to follow a normal distribution $N(0, Q)$, with input noise covariance $Q$. Other distributions are also possible and will determine the type of stochastic filter used. Eq. [1] corresponds to the time update step in the Kalman filter. Feedback is given to the filter through measurements $\hat{x}_k$. In the system, position measurements are available from different data sources, as for example in Fig. 3. For example, position of the vehicle can be measured by the navigation system, denoted as $\hat{x}_k''$. Additionally, if a calibrated ranging device (e.g. stereoscopy, laser) is available on the vehicle, given a known ground control point (GCP) in the scene, the position of the vehicle can be estimated using the ranging device, denoted as $\hat{x}_k'$. Each data source has its specific accuracy characteristics. The accuracy of the navigation system can depend strongly on the quality of the GPS signal. In an urban environment, this can drop significantly due to GPS outage. The accuracy of the measurement using the ranging device depends on the type of device used, the distance of the object and the quality of the system calibration. Each error distribution can be estimated and be integrated in the final measurement estimate. Under the assumption of normal distributions, this would become (1D example):

$$\hat{x}_k = \frac{\sigma_{x_k'}^2}{\sigma_{x_k'}^2 + \sigma_{x_k''}^2}\hat{x}_k'' + \frac{\sigma_{x_k''}^2}{\sigma_{x_k'}^2 + \sigma_{x_k''}^2}\hat{x}_k' \qquad\qquad [2]$$

$$\frac{1}{\sigma_{\hat{x}_i}^2} = \frac{1}{\sigma_{x_i'}^2} + \frac{1}{\sigma_{x_i''}^2} \qquad\qquad [3]$$

In the case of additional available data sources for position measurement, these can be included in Eq.[2] and [3] by adding further terms.

The integrated measurement $\hat{x}_k$, can be used in the measurement update step of the Kalman filter:

$$\hat{x}_k = x_k + v_k \qquad\qquad [4]$$

By integrating the measurements from the different data sources through Eq.[2] and [3], the predictor-corrector algorithm for the Kalman filter can be applied based on Eq.[1] and Eq.[4].

Based on the stereo triangulation of the control points, e.g. ground control points, in the images and by using error propagation, the error covariance on the position can be estimated. The error propagation in this process relates the uncertainty on the user input to the uncertainty of the position estimation taking into account all the affecting parameters. The uncertainty on the user input is measured by estimating the (sub)pixel accuracy during the digitalisation process.

In one example, the propagation process can be modeled as follows. In the most simple case, a camera geometry with parallel image planes can be assumed, aligned epipolar lines and image coordinate systems centered at the focal point of each camera. Let the image coordinates be given by $X_L=[x_L, y_L]$ and $X_R=[x_R, y_R]$ in the left and right image, respectively. Considering these as normally distributed random vectors with means $m_L$ and $m_R$ and covariance matrices $V_L$ and $V_R$. From $X_L$ and $X_R$ the coordinates $[X, Y, Z]^T$ of the 3D point $P$ can be estimated. The simple approach of using the ideal noise-free triangulation equations $P = [X,Y,Z]^T = f(X_L, X_R)$, or

$$X = b(x_L + x_R)/(x_L - x_R)$$
$$Y = b(y_L + y_R)/(x_L - x_R) \qquad\qquad [5]$$
$$Z = 2b/(x_L - x_R)$$

assuming a unit focal length and a baseline of 2b, and inferring the distributions of X, Y and Z as functions of random vectors $X_L$ and $X_R$ can be taken. If f was linear, P would be normal with mean $m_p = f(m_L, m_R)$ and covariance

$$V_P = J \begin{bmatrix} V_L & 0 \\ 0 & V_R \end{bmatrix} J^T \qquad\qquad [6]$$

where J is the matrix of first partial derivatives of $f$ or the Jacobian. Since $f$ is nonlinear these expressions can be used as first-order approximations. To model the uncertainty on additional parameters of the stereo configuration (e.g. calibration errors), the function $f$ can be extended to model the additional dependencies.

In some embodiments according to the present invention, the image processing means furthermore comprises an accuracy control means 130 for determining whether for a given session accuracy falls within predetermined levels, e.g. for determining whether the accuracy is within the expected margins. Such a system furthermore may be adapted for automatically increasing the number of control points used for generating position determination information. The system thus may be adapted for selecting a density of the network of control points required for a required accuracy. Alternatively or in addition thereto, the system furthermore may be adapted for selecting different control points for obtaining a better accuracy. If not enough network control points are available to obtain the required accuracy, the system may inform the user that the expected accuracy can not be reached and may indicate that measurement of additional control point positions in the filed are required. Such an accuracy control may be performed in an automated and/or automatic way. It may be performed using a predetermined algorithm, based on neural networks, etc. In preferred embodiments, the image processing means may integrate forward and backward control points and the different observations of the object in overlapping image frames in order to have an accurate determination of the position or physical dimensions of an object in the image. The accuracy control means 130 may use information from the stochastic filter 120, as set out above, although the invention is not limited thereto.

In one particular embodiment, the first aspect relates to a system as described above, whereby the system for generating position determination information is adapted for generating a plurality of position determination information using a moving platform. The image receiving means 102 thereby typically receives a plurality of images, e.g. video images or dynamic images for determining position determination information for objects along a predetermined route. For such an embodiment, part of the system or the full system may be incorporated in a transportation means, such as e.g. a vehicle. An example of such a system is illustrated in Fig. 4, whereby the image receiving means 102 includes image recording means 103 such as cameras 103, such cameras may be mounted on a reference frame on a transportation means 202, as indicated in Fig. 4, and thus the local reference frame may be moving. The inertial measurement unit 206 for determining and/or estimating position information of the local camera frame, which may be part of or provide data to the inertial navigation system information 105. The inertial measurement unit may take into account a speed of the transportation means 202, a trajectory of the transportation means 202, etc. The system furthermore may comprise an antenna for receiving information from a global positioning system 204 and a frame for supporting the image recording means 103. By way of example, a complete mapping of objects observed and derived from a video sequence recorded along a route may be obtained for a transportation means displacing at a speed between 20-30 km/h whereby video logging is performed at adequate frame rates, e.g. with a frame rate of more than 2 frames per second. In order to relate the video frames with positional information, time stamps are necessary for each captured video frame and accurate synchronization with position information about the transportation means, i.e. the inertial navigation system frame, is needed. The system may operate as described above, whereby the position information for the control points is taken into account for correcting for drift of the inertial navigation system. The inertial navigation system however typically may suffer from such short-term drift and can, using the control point position information, be compensated to achieve high positional accuracies. Such correction may be performed using control points, e.g. ground control points, measured in the field at regular intervals. The control points can be determined in the video images or dynamic images and, taking into account the predicted accuracy associated with the measurements, e.g. three dimensional (3D) measurements, of the control points due to digitisation errors, distance to the camera and/or calibration accuracy, and the control point information can be propagated along the video track in forward and backward direction.

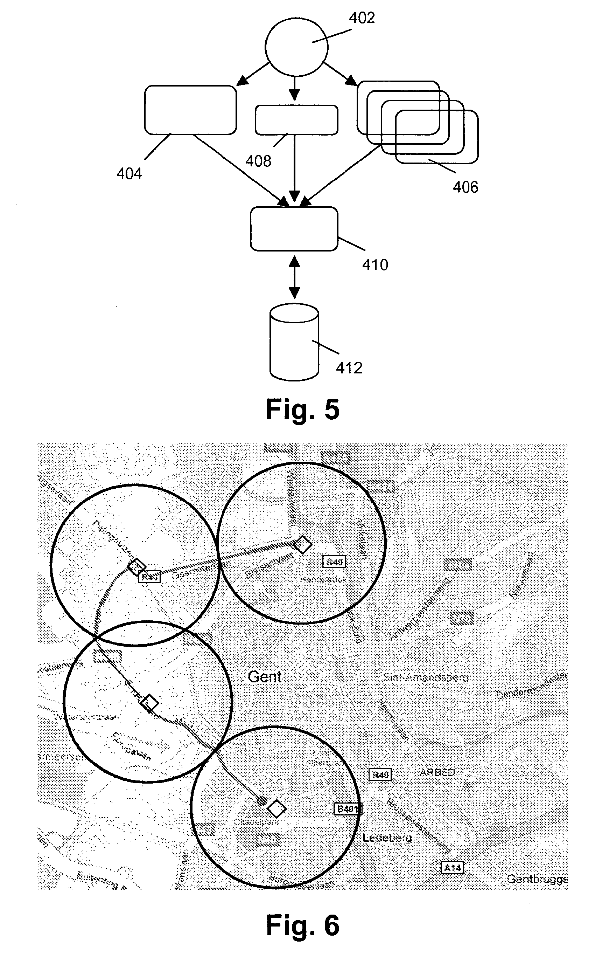

In embodiments according to the first aspect of the present invention the information flow may be for example as indicated in Fig. 5. The information may be synchronised using a synchronisation clock providing a synchronisation signal 402. Information corresponding with inertial navigation system data 404 and image data 406 obtained from within the inertial navigation system are combined together with positional information 408 of a control point for which an image is recorded in the image data 406. This information is processed in the image processing means 108, whereby positional information 410 for an object in the environment is derived. This information is then stored in a storing system. Such stored information 412 may further comprise metadata concerning the object in the environment, whereby the content thereof may depend on the specific application that is envisaged.

According to one embodiment, the present invention relates to a system for generating positional data wherein the accuracy is controlled using a ground control point network. Control of the accuracy can be performed by controlling the number of control points that are used or by selecting different control points, depending on accuracy characteristics associated to different control points. The total positional accuracy which can be obtained by the system is dependent on different variables: the input noise Q of the navigation system, the measurement noise of the navigation system $x_k'$, the measurement noise of the ranging device $x_k''$, and the number of GCP's used by the ranging device. To make a prior estimation, the contribution of the navigation system may be split in two components, as illustrated in the example of the stochastic filter indicated above : the relative measurements and the position measurements. The relative measurements which are based on gyroscopes and accelerometers have a stable performance over a survey route. Position measurements rely on the quality of the GPS signal and can vary significantly. An upper bound for the positional accuracy is estimated by disregarding the position measurements and by estimating the accuracy in absence of GPS signal. The posterior estimate covariance $P_k$ which is estimated using for example a Kalman filter can be used to determine the number of GCP's necessary to attain a given positional accuracy $\bar{P}$.

Given a Kalman filter, the following equations apply:

$$P_k = (I - K_k)(P_{k-1} + Q)$$
$$K_k = (P_{k-1} + Q)(P_{k-1} + Q + R)^{-1}$$

[7]

For time step k, the Kalman gain K and posterior estimate covariance $P$ can be calculated. When disregarding the position measurements of the navigation system, the measurement covariance R only takes into account the error made by the ranging device. This models the accuracy taking into account errors like the distance to the object, range errors and calibration errors. Taking an average distance to object, $R$ can be modeled for the ranging device. Given $R$ and $Q$, Eq.[7] can be used to solve the inequality with respect to time step $k$:

$$P_k \geq \bar{P}$$

[8]

This may give the maximum step $k_{\max}$ at which the next GCP needs to be positioned to guarantee an overall

positional accuracy $\overline{P}$. The time step $k_{max}$ can be associated with the maximum distance $d_{max}$ between GCP's in the absence of GPS signal and is an upperbound estimate for a given survey. If additional information on the position measurement is available (e.g. when the survey is done in rural areas under open skies), this information can be used to deliver a more accurate estimate of $R$. This will result in a better estimate of the distance between GCP's. It is an advantage of embodiments according to the present invention that the number of ground control points needed for obtaining a given positional accuracy can be estimated.

In a second aspect, the present invention relates to a method for generating position determination information. Such a method may e.g. advantageously be performed in a system as described in the first embodiment and may comprise steps corresponding with the functionality of the different components as described in the above system. The method for generating position determination information comprises obtaining at least one image of the environment and obtaining control point position information, e.g. absolute geographic position information. The method furthermore comprises associating the control point position information to the image of the control point present in the at least one image of the environment. The method comprises controlling the accuracy of the positional information to be obtained by selecting the control points used or by controlling their number. Furthermore, the method comprises deriving positional or size related information regarding an object in the environment by using the image and thereby taking into account the positional information of the imaged control point. The method furthermore may take into account information from the inertial navigation system for deriving positional or size related information regarding an object in the environment by using the image. The method may comprise using a stochastic filter, such as e.g. a Kalman filter to fuse the control point information with the imaged data. The method furthermore may comprise a step of determining whether the accuracy of the system is significantly high. The method may comprise, prior to obtaining said image, estimating an accuracy of the position information that will be obtained and performing said controlling as function thereof. Controlling the control points comprises controlling the number of control points used. If the accuracy is not within a predetermined criterion, the accuracy may be increased by increasing the number of control points, e.g. by increasing the density of the network of control points. It may inform the user that a larger number of control points is required. The method may comprise a step for deciding whether to use global positioning information where available and whether to use the method based on control point information associated to image points as described above. The latter may be determined in view of availability of global positioning information, e.g. depending on obstruction of the global positioning signal by the environment, in view of the required accuracy, in view of the required efficiency, etc. In one embodiment, where video information is obtained by moving a transportation means along a route for which position determination information is to be determined, the method furthermore comprises, for a known network of control points, determining a suitable track for obtaining track information with high accuracy. The latter may be performed by selecting different tracks along the points of interest and evaluating the distribution of the control points along the route of interest and determining an accuracy for the different tracks. The track with the highest accuracy then may be selected.

In a third aspect, the present invention relates to an application and a system for running it for mapping or surveying an area, path, object or set of objects, whereby use is made of position determination information as obtained using a system according to the first aspect or a method according to the second aspect. Such an application may be used in transportation means, e.g. vehicles, for providing a route along which a person needs to travel, in a surveying system, etc.

In another aspect, the present invention relates to a method and system for setting up a survey using a ground control point network. It is an advantage of embodiments according to the present invention that a survey can be setup for which a predetermined degree of accuracy can be obtained. The method comprises obtaining information regarding control points of a ground control point network, obtaining information about the geographic positional information that needs to be mapped and determining a route based on said information regarding control points of the ground control point network and the information regarding the geographic area that needs to be mapped. Determining a route thereby comprises taking into account an accuracy of positional information obtained along said route by controlling the ground control points used from the ground control point network. Controlling the ground control points used may comprise controlling a number of control points that is used, by selecting which ground control points used, etc. For example, the accuracy of the positional information can be increased by adding a further control point to the route or by varying the route at least partly so that a different control point is used. Based on the information regarding control points of the ground control point network, a good or improved route can be planned for obtaining the geographic positional information with a predetermined accuracy. Determining such a route may be performed by using the information of the ground control points in a discrete or combinatorial optimisation problem. The optimal determination of a route may for example be performed in two steps: (1) solving a covering problem, and (2) solving a routing problem. In the first step, the geographical position and number of ground control points are determined over the surveyed region. Determining position and number of ground control points may comprise determination of a covering with a good, increased or optimum cost, wherein the covering must cover selected points, streets or regions for which geographic positional information is to be determined at least once and wherein the cost is defined by the coverage of the selected points, streets or regions, and the maximum allowable distance $d_{max}$ between control points for obtaining an accuracy above a predetermined level.

A number of algorithms exist for determining a covering, comprising exact algorithms and heuristic algorithms. Exact algorithms may for example be branch-and-bound algorithms, progressive algorithms based on reminiscent of linear programming, algorithms making use of a cutting-plane method based on linear programming, etc. Heuristic algorithms may for example comprise constructive heuristic algorithms using a nearest neighbour algorithm, an iterative algorithm wherein portions of the covering are replaced by other possible portions and wherein an evaluation is made of the cost, a randomised improvement algorithm, algorithms based on artificial intelligence, etc. In this scenario, a good or optimal spatial layout of the GCP network can be solved by using such an optimisation algorithm where it needs to be determined how many structures are required to cover selected points, streets or regions with a given accuracy. This delivers the number and position of GCP's necessary in the GCP network for a given positional accuracy $\overline{P}$. The user defined accuracy $\overline{P}$ can be associated with the maximum allowable distance $d_{max}$ between control points through the methodology previously described. For example, given the estimated maximum distance between GCP's to attain a given positional accuracy, the spatial layout of the GCP network can be planned for a given region. Each GCP has an associated action radius within which the positional accuracy $\overline{P}$ can be guaranteed. The size of the radius depends on $d_{max}$, the density of the street network and the type of survey that is going to be performed. For example, for a survey of main roads which show little curvature compared to the maximum distance between GCP's, the action radius can be taken the same as this maximum distance. Once the covering problem is solved, the optimal route can be determined by determining a route over the selected points, streets or regions with a good, increased or optimum cost. Constraint to the routing problem is that the distance on the route to the closest GCP cannot exceed $d_{max}$, as this would decrease the positional accuracy below the required positional accuracy $\overline{P}$. The cost is defined by the coverage of the selected points, streets or regions and the total distance traveled. By way of illustration, Fig. 6 illustrates a route that is planned using predetermined accuracy conditions. It illustrates determination of a route using four ground control points each with their action radius, resulting in a given positional accuracy.

Methods according to embodiments of the present invention furthermore may comprise generating a new ground control point in case a certain predetermined accuracy cannot be attained for a given geometrical position or in a given area. Generation of such a new ground control point may be performed in any suitable way. Furthermore, based on the above technology, the present invention also relates to a method and system for determining a good or optimum lay-out of ground control points for having a good or optimum coverage of a geographic area to be mapped.

By way of illustration, the present invention not being limited thereto, a number of examples are provided illustrating features and advantages of embodiments as described above.

In a first example, a one dimensional case is shown indicating which ground control points are required for having a predetermined accuracy. In the present example, the input model consists out of a relative displacement as typically calculated through acceleration and pose measured by an inertial measurement unit. The input noise is modelled as a normal distribution $N(0,Q)$ with $\sigma_Q = 1cm$. The input is integrated with loosely coupled measurements. Two types of measurements are used: position measurements of a GPS and position measurements of a GCP network. In this example, GPS measurements are taken concurrently with the input. The GPS measurement noise in this example is modeled as a normal distribution $N(0,R_{GPS})$ with $\sigma_{R_{GPS}} = 30cm$. Measurement from the GCP network in contrast are taken on selected locations. In this example, the position measurement from the GCP network is taken from a normal distribution $N(0,R_{GCP})$ with $\sigma_{R_{GPS}} = 3cm$. This last quantity may be dependent of the accuracy of the geometry (e.g. in stereoscopic measurement distance to camera). In the case of 1D as used in the present example, the covariance matrices reduce to single variances. The posterior estimate covariance $P_k$, which can be used to determine the number of ground control points necessary to obtain a given positional accuracy can be given by

$$P_k = (I - K_k)(P_{k-1} + \sigma_Q^2)$$

$$K_k = \frac{P_{k-1} + \sigma_Q^2}{P_{k-1} + \sigma_Q^2 + \sigma_R^2} \qquad [9].$$

Furthermore, the positional accuracy $P_k$ also should fulfil the requirement

$$P_k \geq \overline{P} \qquad [10]$$

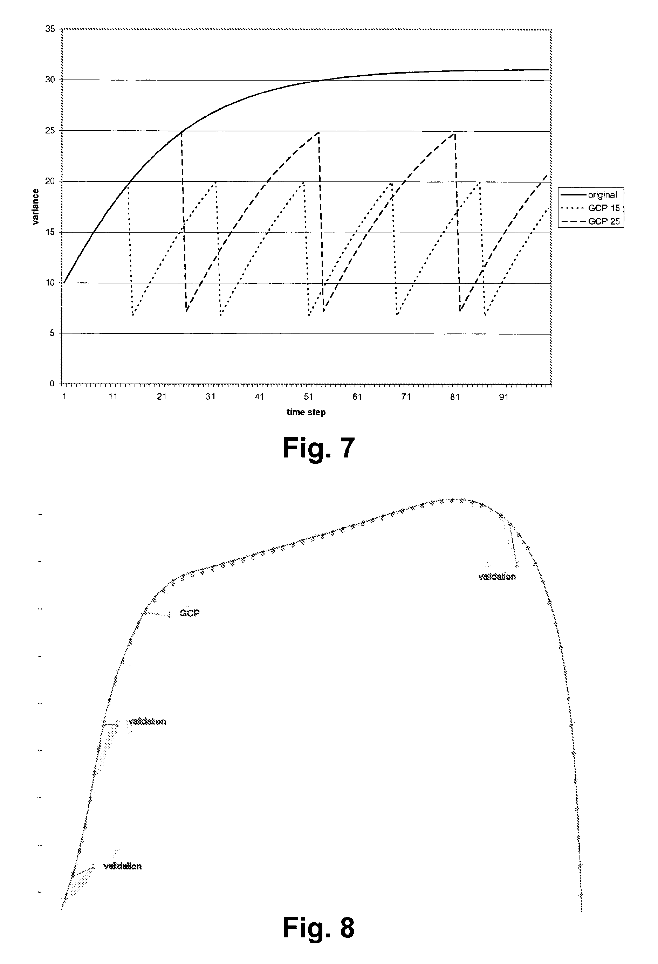

In Fig. 7, the different output variances have been plotted as function of the time step k. As can be seen on the plot of the original variance, the output variance of the system which relies on GPS only, converges to about *30cm²,* corresponding to the theoretical convergence limit $\alpha = \sqrt{QR}$. In the example, the maximum time step $k_{max}$ where a GCP measurement needs to occur is determined, in order that the system has a given accuracy. For example, suppose a given accuracy $\overline{P}$ = 20$cm^2$ needs to be obtained. Solving the above identified equations using the given values for the noise variances results in $k_{\max}$ =18 time steps. Over a sequence of 100 frames, this would require a network of 5 GCP's. In the case an accuracy of $\overline{P}$ = 25$cm^2$ needs to be obtained, solving these equations leads to a $k_{\max}$ = 28 time steps and a network of 3 GCP'S.

This example illustrates the possibilities for determining the required number of ground control points in order to reach a given accuracy in the positional data to be determined.

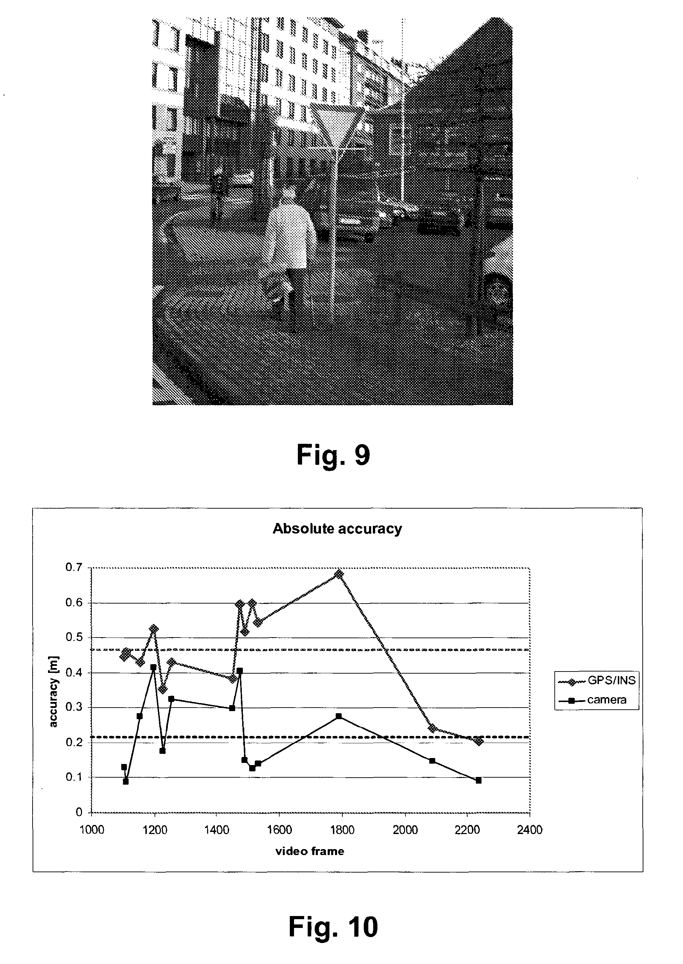

In a second example, an original GPS/INS trajectory is shown in Fig. 8. Along this trajectory a number of object points have been surveyed (cfr. Fig. 9). The blue points are the position of the vehicle which have been processed using one ground control point with the Kalman filter. To validate the accuracy, extra control points have been measured along the trajectory. FIG. 10 shows the evaluation of the absolute accuracy of the system. The test is over a trajectory of about 4 km, taken in the city center where GPS outage is frequent. The plot shows the absolute accuracy of the position of the control points measured with the GPS/INS-trajectory and the same points measured with the trajectory processed by the designed Kalman filter based on 3 GCP's. The number of GCP's has been calculated using the described methodology for a minimum standard deviation on the accuracy of 20cm. In this case, the INS data is taken after the trajectory has been driven. Given the logged INS performance (e.g. changes due to GPS outage), the number and position of GCP's can be determined using the described methodology. After processing, the validation shows that the standard deviation on the position error drops from 46cm to 21 cm. The upper limit drops from 68cm to 42cm.

In one aspect, the present invention furthermore relates to a computer program product assisting in performing a method as described above. In one embodiment according to this aspect, the present invention relates to a computer program product for driving a camera for obtaining at least one image according to a method for generating position determining information as described above. The image data collection thereby may be adapted such that control points are imaged in the image of the environment taken.

In another embodiment according to this aspect, the present invention relates to a computer program product for controlling the camera and performing system calibration based on position information about control points present in the at least one image of the environment as can be used in a method for generating position determining information.

In another embodiment according to the present aspect, the present invention relates to a computer program product for data synchronisation and acquisition by the system for obtaining at least one image and a corresponding system as can be used in a method for generating position determining information. The data synchronisation thereby may comprise synchronising the absolute geographic position information for the control points visible in the at least one image of the environment and the data obtained by the imaging system.

In another embodiment according to the present aspect, the present invention relates to a computer program product for data integration between the control point information and the image of the environment or associated data concerning the camera reference frame. In these embodiments, the software may be adapted for three dimensional digitalisation of video images.

The computer program product according to the present aspect may be adapted for planning a track for determining position determination information with a given accuracy. The track thereby may be adapted in view of the control points available along the track, such that control points may be present at regular intervals throughout the track, i.e. that no large gaps occur wherein no control point information is present for images along the track. In other words, if the user has a given network of control points, different tracks can be compared and the track resulting in the highest accuracy may be selected to be followed for determining position related information.

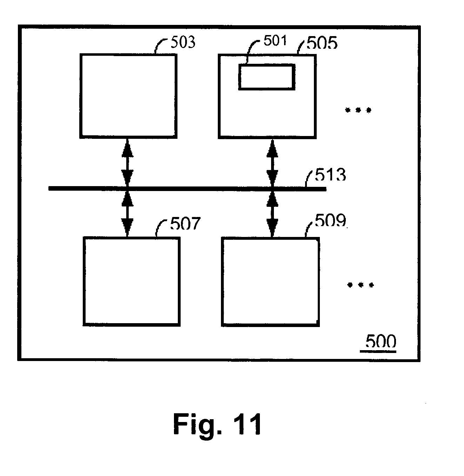

Furthermore, the above-described method embodiments of the present invention may be implemented in a processing system 500 such as shown in Fig. 11. Fig. 11 shows one configuration of processing system 500 that includes at least one programmable processor 503 coupled to a memory subsystem 505 that includes at least one form of memory, e.g., RAM, ROM, and so forth. It is to be noted that the processor 503 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The processing system may include a storage subsystem 507 that has at least one disk drive and/or CD-ROM drive and/or DVD drive. In some implementations, a display system, a keyboard, and a pointing device may be included as part of a user interface subsystem 509 to provide for a user to manually input information. Ports for inputting and outputting data also may be included. More elements such as network connections, interfaces to various devices, and so forth, may be included, but are not illustrated in Fig. 11. The various elements of the processing system 500 may be coupled in various ways, including via a bus subsystem 513 shown in Fig. 11 for simplicity as a single bus, but will be understood to those in the art to include a system of at least one bus. The memory of the memory subsystem 505 may at some time hold part or all (in either case shown as 511) of a set of instructions that when executed on the processing system 500 implement the steps of the method embodiments described herein. Thus, while a processing system 500 such as shown in Fig. 11 is prior art, a system that includes the instructions to implement aspects of the methods for generating positional information of an object in an environment is not prior art, and therefore Fig. 11 is not labelled as prior art.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

It is an advantage of embodiments according to the present invention that a recalibration between the absolute geographic reference system and the inertial navigation system can be performed in a reliable way. When the system is a mobile system, such a re-calibration can be performed even without halting the system. Furthermore such a re-calibration is only little dependent on the environment, as it e.g. is not influenced by e.g. obstructed GPS signals.

It is an advantage of embodiments according to the present invention that it is based on appropriate integration of available data. Embodiments of the present invention allow to obtain centimetre accuracy by providing a solution for the drift of the inertial navigation system, which in some cases may be up to 1 à 2 cm drift each second.

It is an advantage of embodiments according to the present invention that a system is obtained with high reliability. Whereas global positioning system positioning is sometimes inadequate for surveying purposes, the present invention solves this problem by avoiding the need for global positioning systems.

It is an advantage of embodiments according to the present invention that control points measured locally in the field at regular intervals and reconstructed in the video images can be used for compensating

It is an advantage of embodiments according to the present invention that a more stable performance of a system for generating position determination information then when relying only on solutions based on global positioning and inertial navigation systems solutions due to loss of signal, trajectory shape etc. of the latter. The use of a well designed control point network, such as a ground control point network makes a highly accurate and stable system possible.

It is to be understood that although preferred embodiments, specific constructions and configurations, as well as materials, have been discussed herein for devices according to the present invention, various changes or modifications in form and detail may be made without departing from the invention. For example, any formulas given above are merely representative of procedures that may be used. Functionality may be added or deleted from the block diagrams and operations may be interchanged among functional blocks. Steps may be added or deleted to methods described within the scope of the present invention, as defined by the appended claims.

**Claims**

1.   A system (100) for generating position determination information, the system comprising

- an image receiving means (102) for obtaining at least one image of the environment,
- a control point information obtaining means (104) for obtaining control point position information about a position of control points (152) in the environment,
- an image processing means (108) for associating said control point position information about a position of the at least one control point (152) in the environment to an image of the control points (152) in the at least one image of the environment and for deriving, from the at least one image of the environment, position information of at least one object in the environment taking into account the associated position information of the image of the control points (152), and
- an accuracy control system adapted for controlling the obtained accuracy of the position information of the at least one object in the environment to obtain at least a predetermined minimum accuracy level by controlling through adjusting the number of control points used and/or by selecting control points with different position.

2. A system (100) according to claim 1, wherein the accuracy control system is adapted for increasing the number of control points used to obtain at least a predetermined minimum accuracy.

3. A system (100) according to any of claims 1 to 2, wherein the image processing means (108) comprises a stochastic filter for associating said control point position information about a position of the control points (152) in the environment to an image of the control points (152) in the at least one image of the environment.

4. A system (100) according to claim 3, wherein the stochastic filter is adapted for fusing control point information with data of an inertial navigation system (105).

5. A system (100) according to any of the previous claims, wherein the position information about a position of control points in the environment is geographic position information with respect to a reference system fixed to the surface of the earth.

6. A system (100) according to any of the previous claims, wherein the image processing means (108) furthermore is adapted for determining an image of the control points in the at least one image of the environment.

7. A system (100) according to any of the previous claims, wherein the image receiving means (102) comprises at least one image recording means (103) for recording the at least one image of the environment.

8. A system (100) according to claim 7, said at least one image recording means (103) having a fixed position in an inertial navigation system, wherein the image processing means (102) furthermore takes into account inertial navigation system information for determining the position of the at least one imaged object.

9. A system (100) according to any of the previous claims, wherein the system (100) furthermore comprises a selecting means for selecting between the image processing means (108) and a data processing means based on a global positioning system.

10. A system (100) according to any of the previous claims, the at least one image comprising dynamic images, wherein the image processing means (108) is adapted for, in a given frame, taking into account position control information of control points associated in a previous and/or a following frame.

11. A system (100) according to any of the previous claims, wherein the system furthermore comprises a track planning means for selecting from a plurality of tracks based on available control points, a track having a suitable accuracy for an application envisaged.

12. A method for generating position determination information in an environment, the method comprising

- obtaining at least one image of the environment,
- obtaining position information about control points (152),
- associating position information about a position of they control points (152) in the environment to an image of the control points (152) in the at least one image of the environment,
- controlling the accuracy to be obtained of the positional information of the at least one object in the environment to obtain at least a predetermined minimum accuracy level by controlling through adjusting the number of control points used and/or by selecting control points with different position, and
- deriving, from the at least one image of the environment, position information of at least one object in the environment taking into account the associated position information of the image of the control points (152).

13. A method according to claim 12, wherein the method comprises, prior to obtaining said image, estimating an accuracy of the position information that will be obtained and performing said controlling as function thereof.

14. A method for setting up a survey using a ground control point network, the method comprises

- obtaining information regarding control points of a ground control point network,
- obtaining information about the geographic positional information that needs to be mapped and

- determining a route based on said information regarding control points of the ground control point network and the information regarding the geographic area that needs to be mapped,

wherein said determining a route comprises taking into account an accuracy of positional information obtained along said route by controlling through adjusting the number of ground control points and/or selecting ground control points with different position used from the ground control point network to obtain at least a predetermined minimum accuracy level.

15. A computer program product storing a program for, when run on a computer, performing all the steps of a method according to any of claims 12 to 14.


**Patentansprüche**

1. System (100) zum Erzeugen von Positionsbestimmungsinformationen, wobei das System Folgendes umfasst:

   - ein Bildempfangsmittel (102) zum Erhalten wenigstens eines Bildes der Umgebung,
   - ein Steuerpunktinformations-Erhaltemittel (104) zum Erhalten von Steuerpunktpositionsinformationen über eine Position von Steuerpunkten (152) in der Umgebung,
   - ein Bildverarbeitungsmittel (108) zum Zuordnen der Steuerpunktpositionsinformationen über eine Position des wenigstens einen Steuerpunkts (152) in der Umgebung zu einem Bild der Steuerpunkte (152) in dem wenigstens einem Bild der Umgebung und zum Ableiten aus dem wenigstens einem Bild der Umgebung von Positionsinformationen wenigstens eines Objekts in der Umgebung unter Berücksichtigung der zugeordneten Positionsinformationen des Bildes der Steuerpunkte (152), und
   - ein Genauigkeitssteuersystem, das dafür ausgelegt ist, die erhaltene Genauigkeit der Positionsinformationen des wenigstens einen Objekts in der Umgebung zu steuern, um wenigstens einen vorgegebenen minimalen Genauigkeitspegel durch Steuern mittels Einstellung der Anzahl verwendeter Steuerpunkte und/oder durch Auswählen von Steuerpunkten mit verschiedener Position zu erhalten.

2. System (100) nach Anspruch 1, wobei das Genauigkeitssteuersystem dafür ausgelegt ist, die Anzahl von verwendeten Steuerpunkten zu erhöhen, um wenigstens eine vorgegebene minimale Genauigkeit zu erhalten.

3. System (100) nach einem der Ansprüche 1 bis 2, wobei das Bildverarbeitungsmittel (108) einen stochastischen Filter enthält, um die Steuerpunktpositionsinformationen über eine Position der Steuerpunkte (152) in der Umgebung einem Bild der Steuerpunkte (152) in dem wenigstens einem Bild der Umgebung zuzuordnen.

4. System (100) nach Anspruch 3, wobei der stochastische Filter dafür ausgelegt ist, Steuerpunktinformationen mit Daten eines Trägheitsnavigationssystems (105) zu verschmelzen.

5. System (100) nach einem der vorhergehenden Ansprüche, wobei die Positionsinformationen über eine Position von Steuerpunkten in der Umgebung geographische Positionsinformationen in Bezug auf ein auf der Oberfläche der Erde fixiertes Referenzsystem sind.

6. System (100) nach einem der vorhergehenden Ansprüche, wobei das Bildverarbeitungsmittel (108) ferner dafür ausgelegt ist, ein Bild der Steuerpunkte in dem wenigstens einem Bild der Umgebung zu bestimmen.

7. System (100) nach einem der vorhergehenden Ansprüche, wobei das Bildempfangsmittel (102) wenigstens ein Bildaufzeichnungsmittel (103), um das wenigstens eine Bild der Umgebung aufzuzeichnen, umfasst.

8. System (100) nach Anspruch 7, wobei das wenigstens eine Bildaufzeichnungsmittel (103) eine feste Position in einem Trägheitsnavigationssystem besitzt, wobei das Bildverarbeitungsmittel (102) ferner Trägheitsnavigationssysteminformationen berücksichtigt, um die Position des wenigstens einen abgebildeten Objekts zu bestimmen.

9. System (100) nach einem der vorhergehenden Ansprüche, wobei das System (100) ferner ein Auswahlmittel umfasst, um zwischen dem Bildverarbeitungsmittel (108) und einem Datenverarbeitungsmittel, das auf einem globalen Positionierungssystem beruht, zu wählen.

10. System (100) nach einem der vorhergehenden Ansprüche, wobei das wenigstens eine Bild dynamische Bilder enthält, wobei das Bildverarbeitungsmittel (108) dafür ausgelegt ist, in einem gegebenen Rahmen Positionssteuerinformationen von Steuerpunkten, die einem vorhergehenden und/oder einem folgenden Rahmen zugeordnet sind, zu berücksichtigen.

11. System (100) nach einem der vorhergehenden Ansprüche, wobei das System ferner ein Spurplanungsmittel umfasst, um aus mehreren Spuren anhand verfügbarer Steuerpunkte eine Spur mit einer geeigneten Genauigkeit für eine in Betracht gezogene Anwendung auszuwählen.

12. Verfahren zum Erzeugen von Positionsbestimmungsinformationen in einer Umgebung, wobei das Verfahren Folgendes umfasst:

- Erhalten wenigstens eines Bildes der Umgebung,
- Erhalten von Positionsinformationen über Steuerpunkte (152),
- Zuordnen von Positionsinformationen über eine Position der Steuerpunkte (152) in der Umgebung zu einem Bild der Steuerpunkte (152) in dem wenigstens einen Bild der Umgebung,
- Steuern der Genauigkeit, die aus den Positionsinformationen des wenigstens einen Objekts in der Umgebung erhalten werden soll, um wenigstens einen vorgegebenen minimalen Genauigkeitspegel zu erhalten, durch Steuern mittels Einstellung der Anzahl von verwendeten Steuerpunkten und/oder durch Auswählen von Steuerpunkten mit unterschiedlicher Position, und
- Ableiten aus dem wenigstens einen Bild der Umgebung von Positionsinformationen wenigstens eines Objekts in der Umgebung unter Berücksichtigung der zugeordneten Positionsinformationen des Bildes der Steuerpunkte (152).

13. Verfahren nach Anspruch 12, wobei das Verfahren vor dem Erhalten des Bildes das Schätzen einer Genauigkeit der Positionsinformationen, die erhalten werden wird, und das Ausführen der Steuerung als Funktion hiervon umfasst.

14. Verfahren zum Einrichten einer Überwachung unter Verwendung eines Bodensteuerpunktnetzes, wobei das Verfahren Folgendes umfasst:

- Erhalten von Informationen bezüglich Steuerpunkten eines Bodensteuerpunktnetzes,
- Erhalten von Informationen über die geographischen Positionsinformationen, die abgebildet werden sollen, und
- Bestimmen einer Route anhand der Informationen bezüglich Steuerpunkten des Bodensteuerpunktnetzes und der Informationen bezüglich des geographischen Bereichs, der abgebildet werden soll,

wobei das Bestimmen einer Route das Berücksichtigen einer Genauigkeit von Positionsinformationen, die längs der Route erhalten wird, durch Steuern mittels Einstellung der Anzahl von Bodensteuerpunkten und/oder durch Auswählen von Bodensteuerpunkten mit unterschiedlicher Position, die von dem Bodensteuerpunktnetz verwendet werden, um wenigstens einen vorgegebenen minimalen Genauigkeitspegel zu erhalten.

15. Computerprogrammprodukt, das ein Programm speichert, um dann, wenn es auf einem Computer abläuft, sämtliche Schritte eines Verfahrens nach einem der Ansprüche 12 bis 14 auszuführen.

**Revendications**

1. Un système (100) de génération d'informations de détermination de position, le système comprenant

- un moyen de réception d'images (102) destiné à obtenir au moins une image de l'environnement,
- un moyen d'obtention d'informations de point de contrôle (104) destiné à obtenir des informations de position de point de contrôle relatives à une position de points de contrôle (152) dans l'environnement,
- un moyen de traitement d'images (108) destiné à associer lesdites informations de position de point de contrôle relatives à une position du au moins un point de contrôle (152) dans l'environnement à une image des points de contrôle (152) dans la au moins une image de l'environnement et destiné à dériver de la au moins une image de l'environnement des informations de position d'au moins un objet dans l'environnement en prenant en compte les informations de position associées de l'image des points de contrôle (152), et
- un système de contrôle de la précision adapté de façon à contrôler la précision obtenue des informations de position du au moins un objet dans l'environnement de façon à obtenir au moins un niveau de précision minimal prédéterminé par un contrôle par ajustement du nombre de points de contrôle utilisés et/ou par la sélection de points de contrôle avec des positions différentes.

2. Un système (100) selon la Revendication 1, où le système de contrôle de la précision est adapté de façon à augmenter le nombre de points de contrôle utilisés de façon à obtenir au moins une précision minimale prédéterminée.

3. Un système (100) selon l'une quelconque des Revendications 1 à 2, où le moyen de traitement d'images (108) comprend un filtre stochastique destiné à associer lesdites informations de position de point de contrôle relatives à une position des points de contrôle (152) dans l'environnement à une image des points de contrôle (152) dans la au moins une image de l'environnement.

4. Un système (100) selon la Revendication 3, où le filtre stochastique est adapté de façon à fusionner des informations de point de contrôle avec des données d'un système de navigation par inertie (105).

5. Un système (100) selon l'une quelconque des Revendications précédentes, où les informations de position relatives à une position de points de contrôle dans l'environnement sont des informations de position géographique par rapport à un système de référence fixé à la surface de la Terre.

6. Un système (100) selon l'une quelconque des Revendications précédentes où le moyen de traitement d'images (108) est adapté en outre de façon à déterminer une image des points de contrôle dans la au moins une image de l'environnement.

7. Un système (100) selon l'une quelconque des Revendications précédentes, où le moyen de réception d'images (102) comprend au moins un moyen d'enregistrement d'images (103) destiné à enregistrer la au moins une image de l'environnement.

8. Un système (100) selon la Revendication 7, ledit au moins un moyen d'enregistrement d'images (103) possédant une position fixe dans un système de navigation par inertie, où le moyen de traitement d'images (102) prend en compte en outre des informations d'un système de navigation par inertie de façon à déterminer la position du moins un objet mis en image.

9. Un système (100) selon l'une quelconque des Revendications précédentes, où le système (100) comprend en outre un moyen de sélection destiné à sélectionner entre le moyen de traitement d'images (108) et un moyen de traitement de données en fonction d'un système de positionnement par satellite.

10. Un système (100) selon l'une quelconque des Revendications précédentes, la au moins une image comprenant des images dynamiques, où le moyen de traitement d'images (108) est adapté de façon à, dans une trame donnée, prendre en compte des informations de contrôle de position de points de contrôle associés dans une trame précédente et/ou suivante.

11. Un système (100) selon l'une quelconque des Revendications précédentes, où le système comprend en outre un moyen de planification de voie destiné à sélectionner parmi une pluralité de voies en fonction de points de contrôle disponibles, une voie possédant une précision adaptée à une application envisagée.

12. Un procédé de génération d'informations de détermination de position dans un environnement, le procédé comprenant

- l'obtention d'au moins une image de l'environnement,
- l'obtention d'informations de position relatives à des points de contrôle (152),
- l'association d'informations de position relatives à une position des points de contrôle (152) dans l'environnement à une image des points de contrôle (152) dans la au moins une image de l'environnement,
- le contrôle de la précision à obtenir des informations de position du moins un objet dans l'environnement de façon à obtenir au moins un niveau de précision minimal prédéterminé par un contrôle par ajustement du nombre de points de contrôle utilisés et/ou par la sélection de points de contrôle avec des positions différentes, et
- la dérivation, à partir de la au moins une image de l'environnement, d'informations de position d'au moins un objet dans l'environnement en prenant en compte les informations de position associées de l'image des points de contrôle (152).

**13.** Un procédé selon la Revendication 12 où le procédé comprend, avant l'obtention de ladite image, l'estimation d'une précision des informations de position qui seront obtenues et l'exécution dudit contrôle sous la forme d'une fonction de celle-ci.

**14.** Un procédé d'établissement d'un relevé au moyen d'un réseau de points de contrôle au sol, le procédé comprenant

- l'obtention d'informations concernant des points de contrôle d'un réseau de points de contrôle au sol,
- l'obtention d'informations relatives aux informations de position géographique qui ont besoin d'être cartographiées, et
- la détermination d'un itinéraire en fonction desdites informations concernant des points de contrôle du réseau de points de contrôle au sol et des informations concernant la zone géographique à cartographier,

où ladite détermination d'un itinéraire comprend la prise en compte d'une précision d'informations de position obtenues le long dudit itinéraire par un contrôle par ajustement du nombre de points de contrôle au sol et/ou par la sélection de points de contrôle au sol avec des positions différentes utilisées à partir du réseau de points de contrôle au sol de façon à obtenir au moins une précision minimale prédéterminée.

**15.** Un produit de programme informatique contenant en mémoire un programme qui, lorsqu'il est exécuté sur un ordinateur, est destiné à exécuter toutes les opérations du procédé selon l'une quelconque des Revendications 12 à 14.

102

103   103      105    104         106

110

108      120            130    112

**Fig. 1**

202            152

**Fig. 2**

# Fig. 3

# Fig. 4

**Fig. 5**

**Fig. 6**

Fig. 7

Fig. 8

## Fig. 9

## Fig. 10

**Fig. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6526352 B
- WO 2004059900 A
- US 2002049530 A1
- EP 1677076 A